(19) Europäisches Patentamt
European Patent Office
Office européen des brevets

(11) EP 1 559 497 A1

# (12) DEMANDE DE BREVET EUROPEEN

(43) Date de publication:
**03.08.2005 Bulletin 2005/31**

(51) Int Cl.7: **B23K 10/00**

(21) Numéro de dépôt: **04300940.6**

(22) Date de dépôt: **23.12.2004**

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(30) Priorité: **27.01.2004 FR 0450136**

(71) Demandeurs:
- **LA SOUDURE AUTOGENE FRANCAISE
75321 Paris Cédex 07 (FR)**
- **L'AIR LIQUIDE, Société Anonyme à Directoire et Conseil de Surveillance pour l'Etude et l'Exploitation des
75321 Paris Cedex 07 (FR)**

(72) Inventeur: **Delzenne, Michel
95130 Franconville (FR)**

(74) Mandataire: **Pittis, Olivier
L'Air Liquide, S.A.,
Direction de la Propriété Intellectuelle,
75, Quai d'Orsay
75321 Paris Cedex 07 (FR)**

## (54) Procédé et installation de coupage plasma à courant asservi au débit ou à la pression du gaz plasmagène

(57) L'invention concerne un procédé de coupage plasma d'une pièce métallique mettant en oeuvre une torche de coupage plasma alimentée en courant électrique et en au moins un gaz plasmagène. Au moins une partie de la rampe de montée en courant mise en oeuvre en début de découpe et/ou de la rampe de descente en courant mise en oeuvre en fin de découpe, respectivement est asservie à la rampe d'augmentation de la pression et/ou du débit du gaz utilisé en début de coupe et/ou la rampe de diminution de la pression et/ou du débit du gaz utilisé en fin de coupe. Installation de mise en oeuvre du procédé.

*Fig.10*

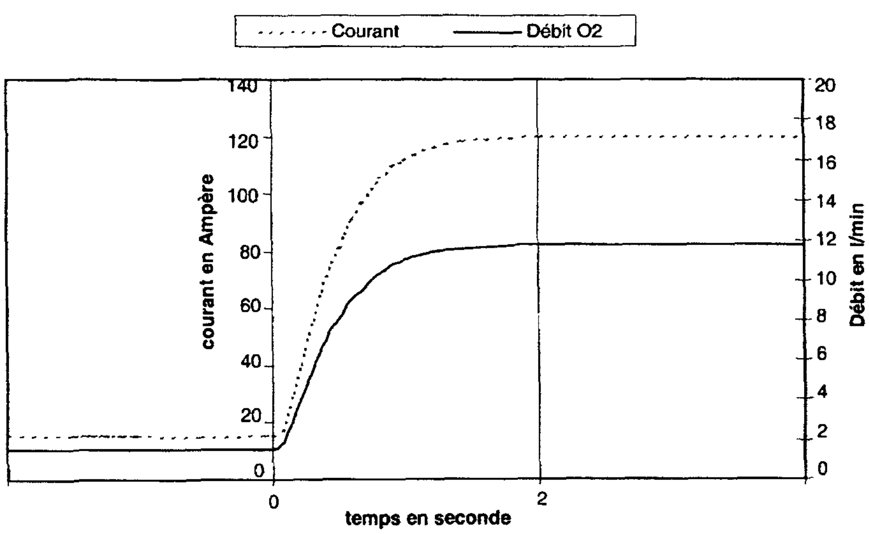


EP 1 559 497 A1

## Description

L'invention porte sur un procédé et une installation de coupage plasma à courant asservi au gaz plasmagène.

Comme représenté en Figure 1, une installation de coupage plasma comprend généralement au moins une source de courant électrique 1 reliée par ses pôles, d'une part, à l'électrode d'une torche 2 et, d'autre part, à la pièce à couper 3 formant l'autre électrode ; une source de gaz 4 d'amorçage, autrement appelé gaz pilote, alimentant la torche 2 via un moyen de régulation 5 de la pression de gaz pilote et une vanne de sectionnement 6 pour ouvrir le circuit de gaz pilote vers la torche 2 ou le fermer selon les étapes de séquencement liées au travail de découpe ; et une source de gaz 7 de coupe alimentant la torche 2 via un moyen de régulation 8 de la pression de gaz de coupe et une vanne de sectionnement 9 pour ouvrir le circuit de gaz de coupe vers la torche 2 ou le fermer selon les étapes de séquencement liées au travail de découpe ; et un dispositif 10 de gestion des séquences de fonctionnement de l'installation de coupage plasma commandant l'ouverture/fermeture des vannes de sectionnement 6 et 9, ainsi que les montées/descentes de courant de la source électrique 1 tant pour les phases d'amorçages que pour les phases de coupe.

Si les moyens de régulation de pression 5 et 8 ne sont pas des organes à réglage manuel mais des organes pilotables à distance selon une consigne de fonctionnement, le dispositif 10 commande également, avant, simultanément ou après, la commande d'ouverture des vannes de sectionnement 6 et 9, la mise en service des organes de régulation 5 et 8.

Lors d'une opération de coupage, les opérations préalables d'amorçage d'arc et de transfert de celui-ci à la pièce à couper étant effectuées, le dispositif 10 commande, à partir d'une information attestant du transfert de l'arc, par exemple par un capteur de courant (non représenté) placé dans le circuit électrique reliant la source de courant électrique 1 à la pièce à couper 3, d'une part, le remplacement du gaz pilote par le gaz de coupe en provoquant la fermeture de la vanne de sectionnement 6 de gaz pilote et l'ouverture, quasi simultanée de la vanne de sectionnement 9 de gaz de coupe et, d'autre part, la montée en courant de la source électrique 1, selon une rampe prédéfinie, pour passer de la valeur du courant dit "pilote" à la valeur du courant dit "de coupe" afin d'établir un arc plasma 11 adapté à l'opération de découpe qui doit suivre.

A la fin de l'opération de découpe, par programme prédéfini ou sur ordre de l'opérateur, une commande d'arrêt de cycle est envoyée au dispositif 10 qui commande alors la source électrique 1 pour arrêter le courant ainsi que, simultanément ou après un délai prédéfini, la fermeture de la vanne de sectionnement 9 de gaz de coupe.

Lorsque l'organe de régulation de pression 8 est un organe pilotable à distance selon une consigne de fonctionnement, une rampe d'ouverture de l'organe 8 ou de montée en pression prédéfinie est commandée avant, simultanément ou après, la commande d'ouverture de la vanne de sectionnement 9 et, à l'inverse, une rampe prédéfinie de fermeture ou de descente de pression par le dispositif 10 avant, simultanément ou après, fermeture de la vanne de sectionnement 9 de gaz de coupe.

Sachant que les problèmes liés à la gestion des rampes de gaz de coupe et des rampes de courant de coupe dans les phases préalables au démarrage de la coupe et à l'arrêt de coupe sont similaires, seule la phase préalable au démarrage de la coupe, c'est-à-dire la phase commençant après le transfert de l'arc pilote à la pièce et finissant lorsque la pression ou le débit de gaz de coupe et le courant de coupe ont atteint les valeurs nominales propices au démarrage de l'opération de coupe proprement dite, est détaillée ci-après en référence aux Figures 2 à 3 annexées.

La Figure 2 représente schématiquement, sous forme d'un graphe, dans sa partie supérieure les ordres donnés, d'une part, aux actionneurs du circuit de gaz de coupe CG et, d'autre part, à la source de courant électrique CC. Le niveau 0 correspond à l'état initial des actionneurs avant l'ordre et le niveau 1 à l'état après l'ordre.

La partie inférieure de la Figure 2 schématise aussi, dans l'hypothèse où le régulateur de pression 8 est un organe piloté à distance avec une durée de montée en pression réglable, le résultat obtenu par ces commandes, à savoir le résultat pour le gaz de coupe (RG) et celui pour le courant de coupe (RC).

Pour le gaz de coupe (CG), les ordres sont :

- un état de débit RG initial de niveau C pour un état 0 de CG,
- à partir de l'état 1 de CG, une rampe $R_C^D$ de montée en débit du niveau C au niveau D, résultant du pilotage de montée en pression du régulateur 8 dans un temps t2, fixé par réglage initial ou programme prédéfini,
- à la fin de t2, un état de pression conforme à la consigne imposée au régulateur piloté 8, et
- à la fin de la montée en courant, c'est-à-dire à la fin de t3, un état de débit RG de niveau D correspondant au nominal requis pour l'opération de découpe proprement dite.

Par ailleurs, pour le courant de coupe (CC), les ordres sont :

- un état de courant RC initial de niveau A pour un état 0 de CC,
- à partir de l'état 1 de CC, différée d'un temps t1, par réglage initial ou programme prédéfini, par rapport à l'état 1 de CG, une rampe $R_A^B$ de montée en courant du niveau A au niveau B dans un temps t3 fixé par réglage initial ou programme prédéfini, et

- à la fin de t3 un état de courant RC de niveau B correspondant au nominal requis pour l'opération de découpe proprement dite.

En fait, la Figure 2 représente un cas idéal d'une bonne programmation des paramètres t1, t2 et t3, pour laquelle la rampe de débit de gaz $R_C^D$ et la rampe de courant $R_A^B$ sont en harmonie sans génération de dysfonctionnement dans l'établissement de l'arc de coupe.

La Figure 3 reprend, quant à elle, un séquencement proche de la Figure 2 illustrant les conséquences d'un choix incorrect des temps t1 et éventuellement de t3, en l'occurrence des valeurs de temporisation trop grandes.

A partir de la commande de passage de l'état 0 à l'état 1 de CG, c'est-à-dire à partir de l'ouverture de la vanne 9 de gaz de coupe (cf. Figure 1) et pendant tout le temps t1, le débit de gaz de coupe RG, partant du niveau C en vue d'atteindre le niveau D, n'est pas limité par une augmentation conjointe et en harmonie du courant RC qui, dans des conditions normales, crée une perte de charge dans la tuyère d'éjection du jet plasma de la torche 2 sensiblement proportionnelle à la valeur du courant.

Le régulateur de pression de gaz de coupe 8, pour maintenir une pression fournie à la torche 2 sensiblement conforme à la consigne de réglage prédéterminée, délivre alors un débit de gaz de coupe en excès par rapport au niveau D jusqu'à la fin de t1, puis à partir de la commande de l'état 0 à l'état 1 de CC, gouvernant le début de la montée du courant RC, une diminution de débit sensiblement proportionnelle à la montée en courant, depuis la fin de t1 et, dans le cas d'espèce où la fin de t2 intervient avant la fin de t3, jusqu'à la fin de la rampe de montée en courant de coupe $R_A^B$ c'est-à-dire jusqu'à la fin de t3, pour atteindre finalement le niveau D requis.

L'excès de débit de gaz de coupe créé dans de telles circonstances a généralement des conséquences néfastes notamment sur:

- l'accrochage du pied cathodique de l'arc plasma sur l'électrode de la torche car l'excès de débit de gaz de coupe risque de provoquer un soufflage de l'arc plasma à sa racine cathodique et conduire à son extinction inopinée et, par conséquent, à l'arrêt de l'opération de coupe,
- la durée de vie de l'électrode de la torche. Le brutal sur-débit momentané de gaz de coupe déstabilise la partie du métal en fusion formant la zone émissive de l'électrode, c'est-à-dire rompt l'équilibre du système de forces qui maintient en cohésion le métal liquide avec le métal solide et provoque l'expulsion de la partie liquide qui est ensuite entraînée par le jet plasma vers l'orifice d'éjection de la tuyère, conduisant ainsi à une usure rapide de l'électrode.

La Figure 4 reprend un séquencement proche des Figures 2 et 3 illustrant les conséquences d'un mauvais choix des temps t1 et de t3, en l'occurrence des valeurs de temporisation trop faibles, associé à un choix incorrect du temps t2, en l'occurrence une valeur de temporisation trop élevée.

Le temps t1 de décalage entre la commande de passage de l'état 0 à l'état 1 de CG de début de rampe de gaz de coupe, à partir du niveau C, et la commande de passage de l'état 0 à l'état 1 de CC de début de rampe de courant, à partir du niveau A, étant quasiment nul, associé à un temps t3 de fin de rampe de montée de courant au niveau B relativement court alors que le temps t2 de fin de montée en pression du régulateur piloté 8 en vue de porter le débit de gaz de coupe au niveau D, est relativement long, les rampes $R_A^B$ de montée en courant de coupe et $R_C^D$ de montée de débit de gaz de coupe ne sont pas en harmonie. Aux différents niveaux de courant entre le niveau initial A et le niveau final B ne correspondent pas des niveaux de débits de gaz requis pour un bon fonctionnement puisque, au cours de la montée en courant, il y a sous-alimentation en gaz de coupe.

Cette sous-alimentation en gaz de coupe au cours de la montée en courant provoque généralement des arcs "doubles" entre tuyère et pièce à couper, conduisant à un endommagement rapide voire à une destruction de la tuyère la rendant inapte à la découpe devant suivre.

Le problème à résoudre est dès lors de disposer d'un procédé et d'une installation de coupage plasma ne présentant pas les inconvénients et dysfonctionnements de l'art antérieur et donc d'éviter les conséquences néfastes sur le déroulement de l'opération de découpe et sur la longévité des pièces actives de la torche, en particulier de ralentir au maximum l'usure de l'électrode.

La solution de l'invention consiste à asservir tout ou partie de la rampe de montée en courant de coupe à la rampe de montée en pression ou en débit de gaz de coupe. Cette solution peut être avantageusement appliquée en fin de coupe, c'est-à-dire qu'on peut asservir tout ou partie de la rampe de descente de courant à la rampe de descente de pression ou de débit.

La solution de l'invention est alors un procédé de coupage plasma d'une pièce métallique mettant en oeuvre une torche de coupage plasma alimentée en courant électrique et en au moins un gaz plasmagène, caractérisé en ce qu'au moins une partie de la rampe de montée en courant mise en oeuvre en début de découpe et/ou de la rampe de descente en courant mise en oeuvre en fin de découpe, respectivement, est asservie à la rampe d'augmentation de la pression et/ou du débit du gaz utilisé au moins en début de coupe et/ou la rampe de diminution de la pression et/ou du débit du gaz utilisé au moins en fin de coupe.

Selon le cas, le procédé de l'invention peut comprendre l'une ou plusieurs des caractéristiques techniques suivantes :

- le courant a une intensité comprise entre 0 et 2000 A, de préférence entre 0 et 900 A.
- le débit du gaz est compris entre 0 et 500 l /min, de préférence entre 0 et 150 l/min.
- la pression du gaz est comprise entre 0 et 20 bar, de préférence entre 0 et 10 bar.
- l'asservissement est obtenu à l'aide d'au moins une information ou signal délivrée par un capteur de pression ou de débit mesurant la pression

ou le débit du gaz de coupe.

- lorsque le capteur de pression ou de débit mesure ou détecte une pression ou un débit du gaz de coupe au cours d'une étape de montée ou, respectivement, de descente en pression ou en débit d'un premier niveau (C) à un deuxième niveau (D) selon une rampe ($R_C^D$ ) de durée prédéterminée (t2), ledit capteur délivre au moins une information ou signal de manière à commander la source de courant électrique délivrant le courant pour débuter conjointement une rampe de courant ($R_A^B$) permettant d'augmenter ou, respectivement, de diminuer la valeur dudit courant d'un premier niveau (A) à un deuxième niveau (B).
- le début de la rampe de courant ($R_A^B$) n'est commandé que lorsque la pression ou le débit de gaz de coupe à atteint un niveau prédéterminé (Q1) au cours d'une étape de montée en pression ou en débit d'un premier niveau (C) à un deuxième niveau (D) selon la rampe ($R_C^D$) de durée prédéterminée (t2) où ledit niveau prédéterminé (Q1) est compris entre le premier niveau (C) et le deuxième niveau (D)
- pendant tout ou partie de la durée de la rampe ($R_C^D$) portant la pression ou le débit de gaz de coupe d'un premier niveau (C) à un deuxième niveau (D), le courant est asservi périodiquement selon une fréquence (*fe*) à ladite rampe de gaz de telle façon à porter ledit courant d'un premier niveau (A) à un deuxième niveau (B) selon une progression en paliers successifs, de préférence d'une amplitude régie par une loi de proportionnalité tenant compte de la pression ou du débit et de la nature du gaz, d'une durée totale sensiblement égale à celle de la rampe de gaz ($R_C^D$).
- pendant toute ou partie de la durée de la rampe ($R_C^D$) portant la pression ou le débit de gaz de coupe d'un premier niveau (C) à un deuxième niveau (D), le courant est asservi en permanence à ladite rampe de gaz de telle façon à porter ledit courant d'un premier niveau (A) à un deuxième niveau (B) selon une progression sensiblement continue, de préférence régie par une loi de proportionnalité tenant compte de la pression ou du débit et de la nature du gaz, d'une durée sensiblement égale à celle de la rampe de gaz ($R_C^D$).
- la mesure de pression ou de débit est opérée sur une ligne de gaz véhiculant le gaz de coupe jusqu'à la torche de coupage, en un endroit de la ligne de gaz situé entre une vanne de sectionnement agencée sur ladite ligne de gaz et ladite torche, de préférence à proximité immédiate de la torche, c'est-à-dire au plus près de la torche, ce qui permet d'obtenir une mesure plus fiable.
- le capteur envoie à la source de courant électrique une information ou un signal analogique du type tension ou du type courant.

L'invention porte aussi sur une installation de coupage plasma comprenant au moins :

- une torche de coupage plasma avec une électrode (non fusible),
- une source de courant électrique reliée par l'un de ses pôles à l'électrode de la torche,
- une source de gaz d'amorçage alimentant la torche via au moins un circuit d'amenée de gaz d'amorçage sur lequel sont agencés un premier moyen de régulation de la pression de gaz d'amorçage et une première vanne de sectionnement pour ouvrir ou fermer le circuit de gaz d'amorçage alimentant la torche en gaz d'amorçage,
- une source de gaz de coupe alimentant la torche via au moins un circuit d'amenée de gaz de coupe sur lequel est agencé un deuxième moyen de régulation de la pression de gaz de coupe et une deuxième vanne de sectionnement pour ouvrir ou fermer le circuit de gaz de coupe alimentant la torche en gaz de coupe,
- un dispositif de gestion des séquences de fonctionnement de l'installation de coupage plasma commandant l'ouverture/fermeture des vannes de sectionnement et les montées/descentes de courant délivré par la source électrique pour les phases d'amorçages et pour les phases de coupe,

caractérisée en ce qu'elle comporte, en outre, un capteur de pression ou de débit agencé, sur le circuit d'amenée de gaz de coupe entre la vanne de sectionnement de gaz de coupe et la torche.

Selon le cas, l'installation de l'invention peut comprendre l'une ou plusieurs des caractéristiques techniques suivantes :

- le capteur est disposé au voisinage de la torche, de préférence au plus près de la torche, sur le circuit d'amenée de gaz de coupe.
- elle comporte une ligne électrique reliant électriquement le capteur à la source de courant ou au dispositif de pilotage du courant délivré par la source.
- le capteur de pression ou de débit délivre un signal sensiblement proportionnel à la pression ou au débit de gaz de coupe qu'il capte dans le circuit d'amenée de gaz de coupe.
- le capteur de pression ou de débit délivre un signal analogique de 0 à 10 V ou de 0 à 20 mA.

L'invention va être décrite ci-après plus en détail en références aux illustratives Figures 5 à 8 annexées.
La Figure 5 schématise un dispositif de mise en oeuvre de l'invention.
A l'installation de coupage plasma de la Figure 1, qui à titre d'exemple sert de base pour créer un dispositif conforme à l'invention, est ajouté un capteur 12 de pression ou de débit entre la vanne de sectionnement 9 de gaz de coupe et la torche 2. De préférence le capteur 12 est disposé au plus près de la torche 2.
Une ligne électrique 12' relie le capteur 12 au dispositif de pilotage du courant délivré par la source 1.
Le capteur 12 de pression ou de débit délivre, par exemple, un signal analogique de 0 à 10 V ou de 0 à 20 mA sensiblement proportionnel à la pression ou au débit de gaz de coupe qu'il capte.
Sachant que les problèmes liés à la gestion des rampes de gaz de coupe et de courant de coupe dans la phase préalable au démarrage de la coupe et dans celle d'arrêt de coupe sont similaires, comme précédemment, seule la phase préalable au démarrage de la coupe est décrite ci-après en références aux Figures 5 à 8.
La Figure 6 montre, sous forme d'un graphe, un premier exemple d'asservissement selon l'invention.
Le synchronisme entre la commande de passage de l'état 0 à l'état 1 de CG, gouvernant le gaz de coupe RG, et la commande de passage de l'état 0 à l'état 1 de CC, gouvernant le courant RC, n'est plus assuré par une temporisation mais par une information délivrée par le capteur 12 de la Figure 5.
Lorsque celui-ci capte une pression ou un débit d'un niveau Q1 prédéterminé, au cours de la montée en pression ou en débit d'un niveau C à un niveau D selon la rampe $R_C^D$ de durée prédéterminée t2, le dispositif de pilotage du courant de la source électrique 1 reçoit alors un ordre de commande de courant CC déterminant le début de la rampe de courant $R_A^B$ d'une durée prédéterminée t3 pendant laquelle le courant est porté d'un niveau initial A à un niveau final B.
L'information délivrée par le capteur 12 étant analogique du type tension (e.g. 0 à 10 V) ou du type courant (e.g. 0 à 20 mA), le niveau de pression ou de débit Q1, donné par exemple comme seuil en-dessous duquel une montée en courant ne se ferait pas sans dommage pour les pièces actives de la torche, correspond à un niveau de tension ou de courant particulier, délivré par le capteur 12, qui est détecté et interprété, par un dispositif approprié, comme un ordre de commande de courant CC enclenchant quasi instantanément la montée en courant selon la rampe $R_A^B$ d'une durée t3 prédéterminée.
La figure 7 représente un graphe d'un deuxième exemple d'asservissement selon l'invention.
Le capteur de pression ou de débit 12 délivre en permanence son information de tension (0 à 10 V) ou de courant (0 à 20 mA) sensiblement proportionnelle à la pression ou au débit de gaz de coupe qu'il capte durant la rampe $R_C^D$ de montée en pression ou en débit du gaz de coupe RG d'un niveau initial C à un niveau final D,
**[0038]** A partir de la commande de passage de l'état 0 à l'état 1 du gaz de coupe CG et durant l'exécution de la rampe de montée $R_C^D$ en pression ou en débit du gaz de coupe RG d'une durée préétablie t2, le dispositif de pilotage du courant de la source 1 reçoit en permanence, via la ligne électrique 12', l'information de tension ou de courant en provenance du capteur 12,
**[0039]** Le dispositif de pilotage du courant de la source 1, selon un échantillonnage, de fréquence *fe*, traduit l'information de tension ou de courant, en provenance du capteur 12, en une commande de courant de coupe, délivré à la torche 2, sensiblement proportionnelle à la tension ou au courant délivré par le capteur 12 et selon une loi de synergie préétablie tenant compte par exemple de la nature du gaz débité,
**[0040]** Pendant l'exécution de la rampe de montée $R_C^D$, de durée préétablie t2, de montée en pression ou en débit du gaz de coupe RG, la pression ou le débit de gaz de coupe est portée du niveau initial C au niveau D, et conjointement le courant de coupe RC est porté du niveau initial A au niveau B selon une rampe de montée en courant $R_A^B$ en forme d'escalier dont la hauteur de marche, autrement dit le niveau de courant de coupe, est déterminée par la loi de synergie préétablie et dont la largeur de marche, autrement dit la durée pendant laquelle est maintenu ledit niveau de courant de coupe, est déterminée par la fréquence d'échantillonnage *fe*.

La figure 8 représente un graphe d'un troisième exemple d'asservissement selon un autre aspect de l'invention :

Le capteur de pression ou de débit 12 délivre en permanence son information de tension (0 à 10 V) ou de courant (0 à 20 mA) sensiblement proportionnelle à la pression ou au débit de gaz de coupe qu'il capte durant la rampe $R_C^D$ de montée en pression ou en débit du gaz de coupe RG d'un niveau initial C à un niveau final D.

A partir de la commande de passage de l'état 0 à l'état 1 du gaz de coupe CG et durant l'exécution de la rampe de montée $R_C^D$ en pression ou en débit du gaz de coupe RG d'une durée préétablie t2, le dispositif de pilotage du courant de la source 1 reçoit en permanence, via la ligne électrique 12', l'information de tension ou de courant en provenance du capteur 12.

Le dispositif de pilotage du courant de la source 1, traduit en temps réel et en permanence l'information de tension ou de courant, en provenance du capteur 12, en une commande de courant de travail, délivré à la torche 2, sensiblement proportionnelle à la tension ou au courant délivré par le capteur 12 et selon une loi de synergie préétablie tenant compte par exemple de la nature du gaz de coupe débité,

Pendant l'exécution de la rampe $R_C^D$, de durée préétablie t2, de montée en pression ou en débit du gaz de coupe RG, la pression ou le débit de gaz de coupe est portée du niveau initial C au niveau D, et conjointement le courant de coupe RC est porté du niveau initial A au niveau B selon une rampe de montée en courant $R_A^B$ continûment et étroitement associée à la rampe $R_C^D$ de montée en pression ou en débit du gaz de coupe RG.

Par rapport aux procédés et dispositifs de l'art antérieur, l'invention présente plusieurs avantages, à savoir que :

- la montée en courant de coupe ne se fait que lorsque les conditions de pression ou de débit de gaz de coupe requises sont réellement satisfaites au niveau de la torche et ce quelles que soient les modifications apportées au réglage ou à la programmation de la temporisation t2 de la rampe de montée de gaz de coupe $R_C^D$,
- l'on garantit par ce système une très bonne adéquation entre la montée en courant de coupe et la montée en pression ou débit de gaz de coupe rendant nul tout risque de mauvais choix dans les valeurs relatives des temporisations t1, t2 et t3 évoquées notamment au travers des figure 2 à 4 et par là même évite les usures prématurées des électrodes et des tuyères, les soufflage d'arc plasma et les dégradations de qualité de coupe.
- ce système peut être avantageusement utilisé pour négocier la phase d'arrêt de coupe en pilotant, de manière analogue mais inverse à la phase de montée en courant, préparatoire à l'opération de coupe proprement dite, le courant de coupe du niveau B jusqu'à un niveau de courant nul par asservissement dudit courant de coupe à la rampe d'évanouissement de gaz de coupe. De la même façon que précédemment la durée de vie des pièces actives s'en trouve grandement augmentée ainsi que le résultat global de coupe.
- le système peut être également mis en oeuvre pour exercer une surveillance des variations de pression ou de débit durant l'opération de coupe proprement dite. En d'autres termes, l'asservissement du courant de coupe à la pression ou au débit de gaz de coupe peut être maintenu durant l'opération de coupe proprement dite, alors que la pression ou le débit de coupe est censée rester à un niveau D fixe et stable, afin de détecter d'éventuelles diminutions involontaires de pression ou de débit, dues par exemple à une fuite inopinée, une rupture de canalisation ou une vidange du stockage de gaz de coupe et d'ajuster le niveau de courant de coupe, selon une loi de synergie prédéterminée, identique ou différente de celles utilisées pour la phase de début de coupe et/ou de fin de coupe, en fonction de la variation détectée par le capteur 12 ou encore couper le courant de coupe en-deçà d'un seuil prédéterminé.
- l'asservissement du courant de coupe à la pression ou au débit de gaz de coupe peut être utilisé durant l'opération de coupe proprement dite pour rester en harmonie étroite quelles que soient les variations de pression ou de débit volontaires commandées par programme ou résultant d'un asservissement de ladite pression ou ledit débit aux variations de vitesse de coupe, commandées par programme ou générées par un calculateur du type commande numérique (CNC) au cours de l'exécution des trajectoires de coupe de forme.

<u>Exemple</u>

A titre d'exemple, non limitatif, de l'application pratique de l'invention, il est donné ci-après une table des relations utilisées pour asservir les montées de courant jusqu'à 120 A ou les descentes de courant, aux évolutions du débit de gaz de coupe, lors de la mise en oeuvre d'une torche de type OCP 150 associée à une installation de type NERTAJET HP 125, commercialisées par la société AIR LIQUIDE WELDING, pour trois gaz de coupe différents donnés dans le Tableau ci-après.

Le capteur de débit utilisé est du type 0 - 10 V à réponse linéaire, pouvant mesuré un débit allant jusqu'à 50 l/min à pleine échelle (10 V), avec coefficient de transformation : tension $U_{Volt}$ = 0,2 X débit $Q_{l/min.}$

La consigne de courant imposée par asservissement au dispositif de pilotage du courant de la source électrique est : $I_{Ampère} = k \times U_{Volt}$

où :

- $U_{Volt}$ est la tension délivrée par le capteur de débit,
- k est le coefficient de transformation de la tension $U_{Volt}$, délivrée par le capteur de débit, avec la consigne de courant $I_{Ampère}$ en fonction du gaz de coupe utilisé.

Les valeur du coefficient k en fonction de la nature du gaz de coupe sont données dans le Tableau ci-après.

Tableau

| Nature du gaz de coupe | Valeur de K |
|---|---|
| Oxygène | 50,8475 |
| Azote | 28,5715 |
| Mélange : Argon + 20 % vol. Hydrogène | 12,766 |

Les courbes résultantes d'asservissement du courant de coupe au débit de gaz de coupe en fonction de la nature du gaz de coupe (Ic = f(Q)) sont données sur la Figure 9.

En outre, la figure 10 représente, sous forme d'un graphe, une application pratique d'un asservissement d'un courant de coupe à une rampe de montée en débit de gaz plasmagène .

Dans ce cas, le gaz de coupe est de l'oxygène, le débit de gaz initial est de 1,5 l/min et le débit de gaz final de 11.8 l/min.

La durée de la rampe de gaz (t2) est de 2 secondes.

Le courant de coupe initial est de 15 A, alors que le courant de coupe final est de 120 A.

Le graphe montre dans l'espace de temps compris entre 0 et 2 secondes, une parfaite harmonie entre les rampes de montée de gaz et de montée de courant.

Le procédé de l'invention appliqué notamment aux séquences de montée en puissance de l'arc plasma et aux séquences de diminution de la puissance de l'arc jusqu'à son extinction finale permet de préserver les électrodes et les tuyères d'une usure prématurée due à une sous alimentation en gaz plasmagène, lors de la montée en courant, d'éviter les soufflage d'arc intempestifs lors des montées en débit de gaz et globalement de se prémunir contre les dégradations accidentelles de la qualité de coupe.

## Revendications

1. Procédé de coupage plasma d'une pièce métallique mettant en oeuvre une torche de coupage plasma alimentée en courant électrique et en au moins un gaz plasmagène, **caractérisé en ce qu'**au moins une partie de la rampe de montée en courant mise en oeuvre en début de découpe et/ou de la rampe de descente en courant mise en oeuvre en fin de découpe, respectivement, est asservie à la rampe d'augmentation de la pression et/ou du débit du gaz utilisé au moins en début de coupe et/ou la rampe de diminution de la pression et/ou du débit du gaz utilisé au moins en fin de coupe.

2. Procédé selon la revendication 1, **caractérisé en ce que** l'asservissement est obtenu à l'aide d'au moins une information délivrée par un capteur de pression ou de débit mesurant la pression ou le débit du gaz de coupe.

3. Procédé selon l'une des revendications 1 ou 2, **caractérisé en ce que**, lorsque le capteur de pression ou de débit mesure ou détecte une pression ou un débit du gaz de coupe au cours d'une étape de montée ou, respectivement, de descente en pression ou en débit d'un premier niveau (C) à un deuxième niveau (D) selon une rampe ($R_C^D$) de durée prédéterminée (t2), on ledit capteur délivre au moins une information ou signal de manière à commander la source de courant électrique délivrant le courant pour débuter conjointement une rampe de courant ($R_A^B$) per-

mettant d'augmenter ou, respectivement, de diminuer la valeur dudit courant d'un premier niveau (A) à un deuxième niveau (B).

**4.** Procédé selon les revendications 1 à 3, **caractérisé en ce que** le début de la rampe de courant ($R_A^B$) n'est commandé que lorsque la pression ou le débit de gaz de coupe à atteint un niveau prédéterminé (Q1) au cours d'une étape de montée en pression ou en débit d'un premier niveau (C) à un deuxième niveau (D) selon la rampe ($R_C^D$) de durée prédéterminée (t2) où ledit niveau prédéterminé (Q1) est compris entre le premier niveau (C) et le deuxième niveau (D)

**5.** Procédé selon l'une des revendications 1 à 4, **caractérisé en ce que**, pendant tout ou partie de la durée de la rampe ($R_C^D$) portant la pression ou le débit de gaz de coupe d'un premier niveau (C) à un deuxième niveau (D), le courant est asservi périodiquement selon une fréquence (*fe*) à ladite rampe de gaz de telle façon à porter ledit courant d'un premier niveau (A) à un deuxième niveau (B) selon une progression en paliers successifs, de préférence d'une amplitude régie par une loi de proportionnalité tenant compte de la pression ou du débit et de la nature du gaz, d'une durée totale sensiblement égale à celle de la rampe de gaz ($R_C^D$).

**6.** Procédé selon l'une des revendications 1 à 4, **caractérisé en ce que**, pendant toute ou partie de la durée de la rampe ($R_C^D$) portant la pression ou le débit de gaz de coupe d'un premier niveau (C) à un deuxième niveau (D), le courant est asservi en permanence à ladite rampe de gaz de telle façon à porter ledit courant d'un premier niveau (A) à un deuxième niveau (B) selon une progression sensiblement continue, de préférence régie par une loi de proportionnalité tenant compte de la pression ou du débit et de la nature du gaz, d'une durée sensiblement égale à celle de la rampe de gaz ($R_C^D$).

**7.** Procédé selon l'une des revendications 1 à 6, **caractérisé en ce que** le capteur (12) délivre à la source de courant électrique une information ou signal analogique du type tension ou du type courant.

**8.** Procédé selon la revendication 2, **caractérisé en ce que** la mesure de pression ou de débit est opérée sur une ligne de gaz véhiculant le gaz de coupe jusqu'à la torche de coupage, en un endroit de la ligne de gaz situé entre une vanne de sectionnement agencée sur ladite ligne de gaz et ladite torche, de préférence à proximité immédiate de la torche.

**9.** Installation de coupage plasma comprenant au moins :

- une torche de coupage plasma (2) avec une électrode,
- une source de courant électrique (1) reliée par l'un de ses pôles à l'électrode de la torche (2),
- une source de gaz d'amorçage (4) alimentant la torche (2) via au moins un circuit (14) d'amenée de gaz d'amorçage sur lequel est agencé un premier moyen de régulation (5) de la pression de gaz d'amorçage et une première vanne de sectionnement (6) pour ouvrir ou fermer le circuit (14) de gaz d'amorçage alimentant la torche (2) en gaz d'amorçage,
- une source de gaz de coupe (7) alimentant la torche (2) via au moins un circuit (17) d'amenée de gaz de coupe sur lequel est agencé un deuxième moyen de régulation (8) de la pression de gaz de coupe et une deuxième vanne de sectionnement (9) pour ouvrir ou fermer le circuit (17) de gaz de coupe alimentant la torche (2) en gaz de coupe,
- un dispositif (10) de gestion des séquences de fonctionnement de l'installation de coupage plasma commandant l'ouverture/fermeture des vannes de sectionnement (6, 9) et les montées/descentes de courant délivré par la source électrique (1) pour les phases d'amorçages et pour les phases de coupe,

**caractérisée en ce qu'**elle comporte, en outre, un capteur (12) de pression ou de débit agencé, sur le circuit (17) d'amenée de gaz de coupe entre la vanne de sectionnement (9) de gaz de coupe et la torche (2).

**10.** Installation selon la revendication 9, **caractérisé en ce que** le capteur (12) est disposé au voisinage de la torche (2), de préférence au plus près de la torche (2), sur le circuit (17) d'amenée de gaz de coupe.

**11.** Installation selon la revendication 9, **caractérisée en ce qu'**elle comporte une ligne électrique (12') reliant électriquement le capteur (12) à la source (1 ) de courant ou au dispositif de pilotage du courant délivré par la source (1).

**12.** Installation selon l'une des revendications 9 à 11, **caractérisée en ce que** le capteur (12) de pression ou de débit délivre un signal sensiblement proportionnel à la pression ou au débit de gaz de coupe qu'il capte dans le circuit (17) d'amenée de gaz de coupe.

**13.** Installation selon l'une des revendications 9 à 12, **caractérisée en ce que** le capteur (12) de pression ou de débit délivre un signal analogique de 0 à 10 V ou de 0 à 20 mA.

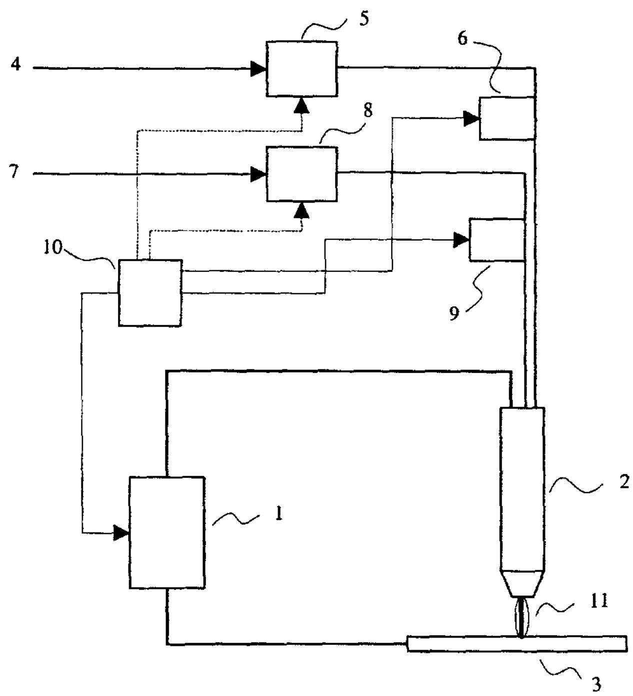


*Fig.1*

*Fig.2*

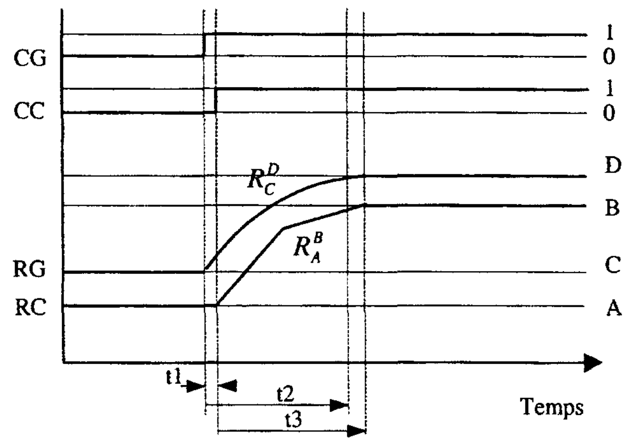


*Fig.3*

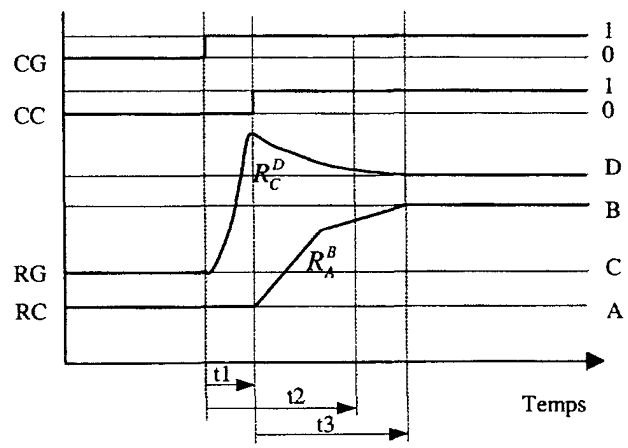


*Fig.4*

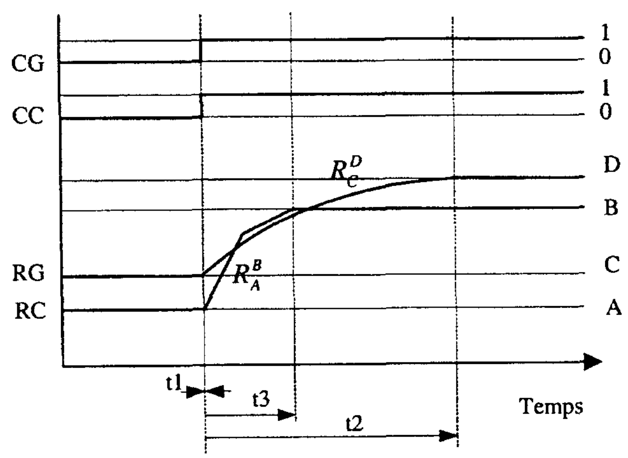

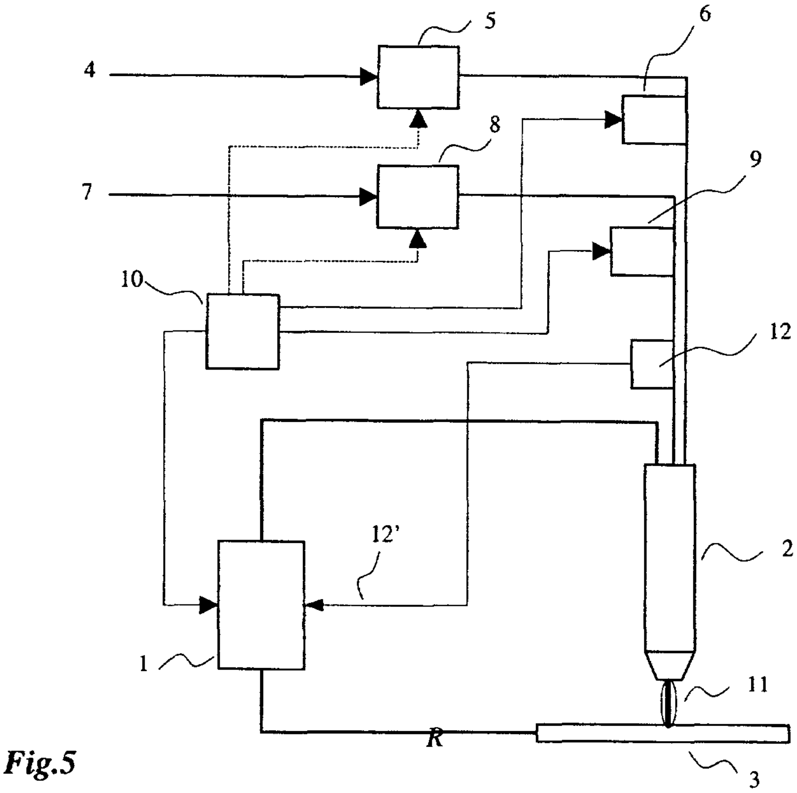
4
5
6
8
7
9
10
12
12'
2
1
11
R
3

Fig.5

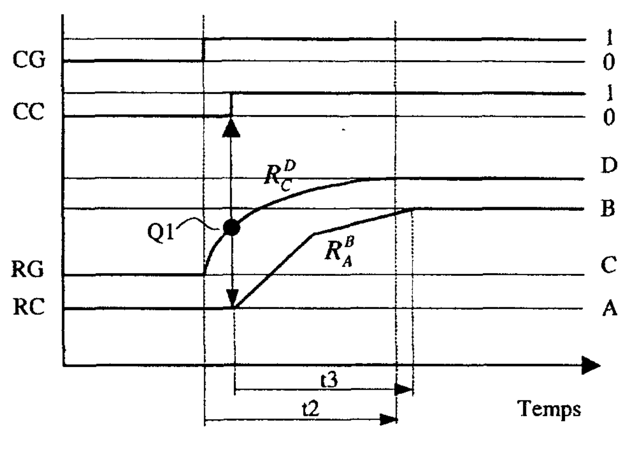
CG
CC
RG
RC
1
0
1
0
D
B
C
A
$R_C^D$
$R_A^B$
Q1
t3
t2
Temps

Fig.6

*Fig.7*

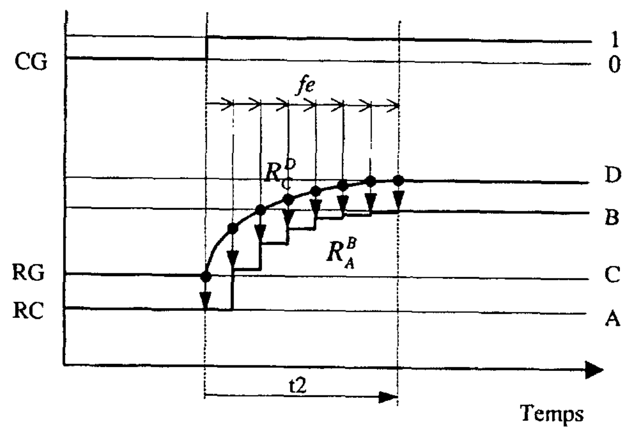
CG
1
0
fe
$R_C^D$
D
B
$R_A^B$
RG
C
RC
A
t2
Temps

*Fig.8*

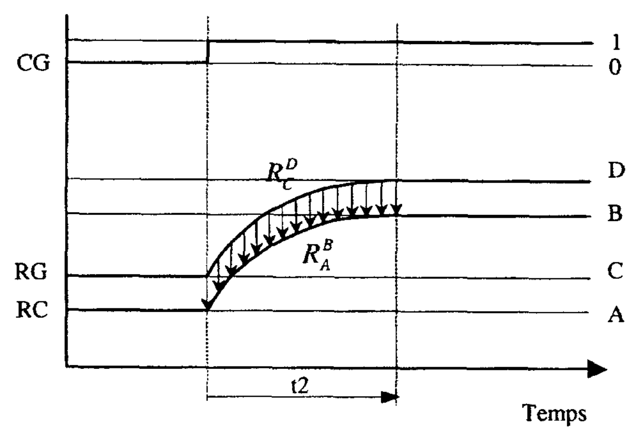
CG
1
0
$R_C^D$
D
B
$R_A^B$
RG
C
RC
A
t2
Temps

*Fig. 9*

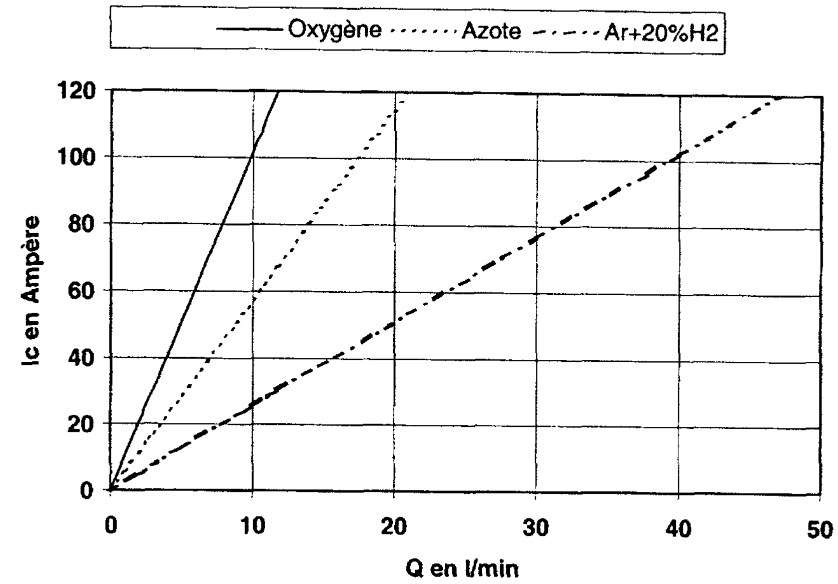
Oxygène
Azote
Ar+20%H2
Ic en Ampère
120
100
80
60
40
20
0
0
10
20
30
40
50
Q en l/min

*Fig.10*

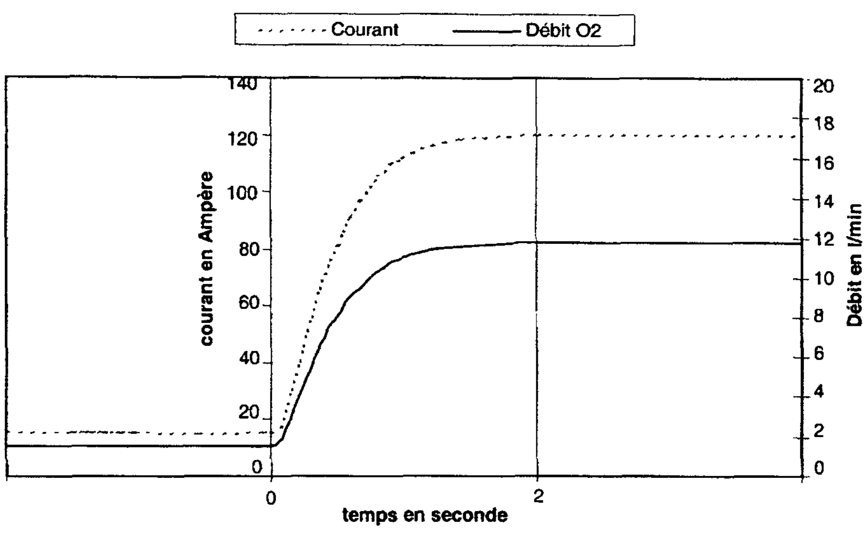
Courant
Débit O2
courant en Ampère
140
120
100
80
60
40
20
0
Débit en l/min
20
18
16
14
12
10
8
6
4
2
0
0
2
temps en seconde

Office européen des brevets

# RAPPORT DE RECHERCHE EUROPEENNE

Numéro de la demande
EP 04 30 0940

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X<br>A | WO 91/16166 A (HYPERTHERM INC)<br>31 octobre 1991 (1991-10-31)<br>* le document en entier * | 1-4,6-13<br>5 | B23K10/00 |
| X<br>A | US 2002/185477 A1 (HARDWICK STEVEN F)<br>12 décembre 2002 (2002-12-12)<br>* le document en entier * | 1-4,6-13<br>5 | |
| X<br>A | US 4 133 988 A (ESIBYAN EDUARD M ET AL)<br>9 janvier 1979 (1979-01-09)<br>* le document en entier * | 1-4,6,<br>8-13<br>5,7 | |
| X | EP 0 003 482 A (MESSER GRIESHEIM GMBH)<br>22 août 1979 (1979-08-22)<br>* le document en entier * | 9,10,12,<br>13 | |
| X | US 6 420 672 B1 (MATUS TIM ET AL)<br>16 juillet 2002 (2002-07-16)<br>* le document en entier * | 9-13 | |
| X | DE 195 36 150 A (ESAB HANCOCK GMBH)<br>3 avril 1997 (1997-04-03)<br>* le document en entier * | 9,10,12,<br>13 | DOMAINES TECHNIQUES RECHERCHES (Int.Cl.7)<br>B23K |
| X | JP 10 263827 A (AMADA CO LTD)<br>6 octobre 1998 (1998-10-06)<br>* abrégé * | 9,10,12,<br>13 | |
| X | JP 06 023556 A (TANAKA SEISAKUSHO KK)<br>1 février 1994 (1994-02-01)<br>* abrégé * | 9,10,12,<br>13 | |

Le présent rapport a été établi pour toutes les revendications

| Lieu de la recherche | Date d'achèvement de la recherche | Examinateur |
|---|---|---|
| Munich | 10 mai 2005 | De Backer, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

1
EPO FORM 1503 03.82 (P04C02)

**ANNEXE AU RAPPORT DE RECHERCHE EUROPEENNE RELATIF A LA DEMANDE DE BREVET EUROPEEN NO.** EP 04 30 0940

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-05-2005

| Document brevet cité au rapport de recherche | Date de publication | Membre(s) de la famille de brevet(s) | Date de publication |
|---|---|---|---|
| WO 9116166 A | 31-10-1991 | US 5070227 A | 03-12-1991 |
| | | AU 654949 B2 | 01-12-1994 |
| | | AU 7577991 A | 11-11-1991 |
| | | AU 642497 B2 | 21-10-1993 |
| | | AU 7781491 A | 11-11-1991 |
| | | AU 644175 B2 | 02-12-1993 |
| | | AU 7853091 A | 11-11-1991 |
| | | CA 2081457 A1 | 25-10-1991 |
| | | CA 2081458 A1 | 25-10-1991 |
| | | CA 2081459 A1 | 25-10-1991 |
| | | DE 69124505 D1 | 13-03-1997 |
| | | DE 69124505 T2 | 22-05-1997 |
| | | DE 69125934 D1 | 05-06-1997 |
| | | DE 69125934 T2 | 13-11-1997 |
| | | DE 69126527 D1 | 17-07-1997 |
| | | DE 69126527 T2 | 25-09-1997 |
| | | EP 0524970 A1 | 03-02-1993 |
| | | EP 0526560 A1 | 10-02-1993 |
| | | EP 0526562 A1 | 10-02-1993 |
| | | IE 911358 A1 | 06-11-1991 |
| | | JP 3100157 B2 | 16-10-2000 |
| | | JP 5507237 T | 21-10-1993 |
| | | JP 2950986 B2 | 20-09-1999 |
| | | JP 5508807 T | 09-12-1993 |
| | | JP 3001633 B2 | 24-01-2000 |
| | | JP 6500956 T | 27-01-1994 |
| | | WO 9116164 A1 | 31-10-1991 |
| | | WO 9116165 A1 | 31-10-1991 |
| | | WO 9116166 A1 | 31-10-1991 |
| | | US 5591357 A | 07-01-1997 |
| | | US 5695662 A | 09-12-1997 |
| | | US 5170033 A | 08-12-1992 |
| | | US 5166494 A | 24-11-1992 |
| | | US 5396043 A | 07-03-1995 |
| | | AU 669313 B2 | 30-05-1996 |
| | | AU 1365095 A | 18-05-1995 |
| | | AU 660021 B2 | 08-06-1995 |
| | | AU 1772592 A | 17-11-1992 |
| | | AU 678730 B2 | 05-06-1997 |
| | | AU 3456795 A | 25-01-1996 |
| | | CA 2108121 A1 | 13-10-1992 |
| | | DE 69229006 D1 | 27-05-1999 |
| | | DE 69229006 T2 | 09-09-1999 |
| | | DE 69232651 D1 | 25-07-2002 |
| | | DE 69232651 T2 | 21-11-2002 |
| | | DE 69233071 D1 | 26-06-2003 |

EPO FORM P0460

Pour tout renseignement concernant cette annexe : voir Journal Officiel de l'Office européen des brevets, No.12/82

**ANNEXE AU RAPPORT DE RECHERCHE EUROPEENNE RELATIF A LA DEMANDE DE BREVET EUROPEEN NO.** EP 04 30 0940

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-05-2005

| Document brevet cité au rapport de recherche | Date de publication | Membre(s) de la famille de brevet(s) | Date de publication |
|---|---|---|---|
| WO 9116166 A | | DE 69233071 T2 | 18-03-2004 |
| | | EP 1324644 A2 | 02-07-2003 |
| | | EP 0697935 A1 | 28-02-1996 |
| | | EP 0794697 A2 | 10-09-1997 |
| US 2002185477 A1 | 12-12-2002 | US 2001045415 A1 | 29-11-2001 |
| | | US 6326583 B1 | 04-12-2001 |
| | | US 6093905 A | 25-07-2000 |
| | | US 6163009 A | 19-12-2000 |
| US 4133988 A | 09-01-1979 | SU 562397 A1 | 25-06-1977 |
| | | SU 560713 A1 | 05-06-1977 |
| | | DE 2610473 A1 | 30-09-1976 |
| | | FR 2303632 A1 | 08-10-1976 |
| | | GB 1536882 A | 29-12-1978 |
| | | JP 52054644 A | 04-05-1977 |
| | | SE 425298 B | 20-09-1982 |
| | | SE 7603205 A | 13-09-1976 |
| EP 0003482 A | 22-08-1979 | DE 2803580 A1 | 02-08-1979 |
| | | AT 369685 B | 25-01-1983 |
| | | AT 928178 A | 15-06-1982 |
| | | DK 33679 A | 28-07-1979 |
| | | EP 0003482 A1 | 22-08-1979 |
| | | JP 1460225 C | 28-09-1988 |
| | | JP 54103762 A | 15-08-1979 |
| | | JP 63006314 B | 09-02-1988 |
| US 6420672 B1 | 16-07-2002 | CA 2372005 A1 | 30-09-2002 |
| DE 19536150 A | 03-04-1997 | DE 19536150 A1 | 03-04-1997 |
| JP 10263827 A | 06-10-1998 | AUCUN | |
| JP 6023556 A | 01-02-1994 | JP 3155355 B2 | 09-04-2001 |

EPO FORM P0460

Pour tout renseignement concernant cette annexe : voir Journal Officiel de l'Office européen des brevets, No.12/82